# EUROPEAN PATENT APPLICATION

(11) **EP 4 597 734 A1**
(43) Date of publication of application: **06.08.2025**
(21) Application number: 24836260.0
(22) Date of filing: 27.06.2024
(51) Int. Cl.: H01M 50/521, H01M 50/502, H01M 50/569, H01M 50/526, H01M 50/588, H01M 50/59

(54) **BUSBAR ASSEMBLY AND BATTERY PACK INCLUDING SAME**

(30) Priority: 04.07.2023 KR 20230086265
(71) Applicant: LG Energy Solution, Ltd., Seoul 07335 (KR)
(72) Inventor: YUN, Sunwoo, Daejeon 34122 (KR)
(74) Representative: Plasseraud IP
(86) International application number: PCT/KR2024/009027
(87) International publication number: WO 2025/009812

(57) **Abstract**

A busbar assembly according to one embodiment of the present disclosure comprises: a busbar that includes a body portion containing a bent portion, and end portions extending from both ends of the body portion and having a through hole formed therein; an insulating layer that is insert-injection molded to surround the body portion, and a cap that surrounds the end portion.

## Description

### [TECHNICAL FIELD]

### Cross Citation with Related Application(s)

This application claims priority from and the benefit of Korean Patent Application No. 10-2023-0086265 filed on July 4, 2023 with the Korean Intellectual Property Office, the disclosure of which is incorporated herein by reference in its entirety.

The present disclosure relates to a busbar assembly and a battery pack including the same, and more particularly, to a busbar assembly having an improved insulation stability, and a battery pack including the same.

### [BACKGROUND]

In modern society, as portable devices such as a mobile phone, a notebook computer, a camcorder and a digital camera have been daily used, technologies of a field related to the mobile devices has been actively developed. In addition, as a secondary battery capable of being charged and discharged is used as a power source for an electric vehicle(EV), a hybrid electric vehicle(HEV), a plug-in hybrid electric vehicle(P-HEV) and the like as a method for solving air pollution and the like caused by existing gasoline vehicles using fossil fuel, a necessity for the development of the secondary battery is increasing.

Currently commercialized secondary batteries include a nickel cadmium battery, a nickel hydrogen battery, a nickel zinc battery, a lithium secondary battery, and the like, and among them, the lithium secondary battery has come into the spotlight because it has advantages, for example, hardly exhibiting memory effects compared to nickel-based secondary batteries and thus being freely charged and discharged, and having very low self-discharge rate and high energy density.

A lithium secondary battery generally uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are arranged with a separator interposed between them, and a battery case which hermetically houses the electrode assembly together with an electrolyte.

Generally, the lithium secondary battery may be classified based on the shape of the exterior material into a can type secondary battery in which the electrode assembly is mounted in a metal can, and a pouch type secondary battery in which the electrode assembly is mounted in a pouch made of an aluminum laminate sheet.

In the case of a secondary battery used for small-sized devices, two to three battery cells are arranged, but in the case of a secondary battery used for a medium- or large-sized device such as automobile, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a battery management system(BMS), a battery disconnect unit(BDU), and a cooling system to form a battery pack.

In the battery pack configured to gather a plurality of battery modules, heat generated from multiple battery cells can be added up in a narrow space, so that the temperature can rise more quickly and excessively. In other words, battery modules in which a plurality of battery cells are stacked and a battery pack equipped with these battery modules can obtain high output, but when the heat dissipation of battery cells is not properly performed or thermal runaway phenomenon occurs in a battery cell, the possibility of explosion or ignition is high.

Meanwhile, a busbar connected to a battery module is provided inside the battery pack.

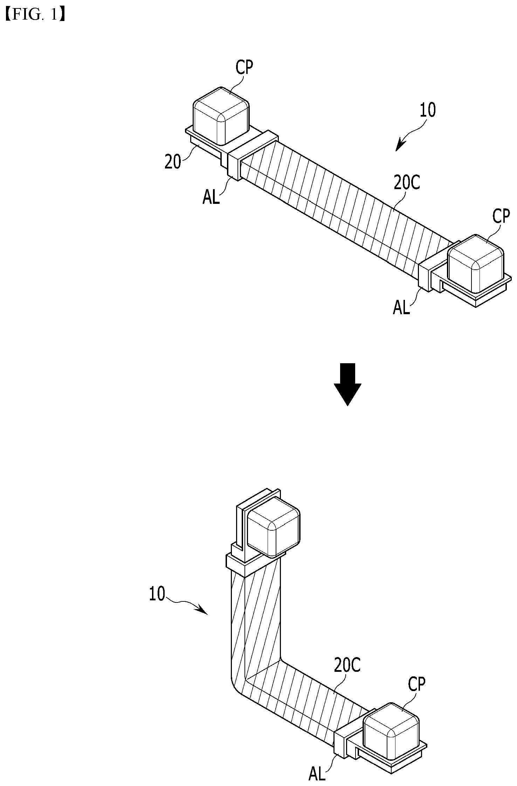

FIG. 1 shows an exploded perspective view and a combined perspective view of a conventional busbar assembly.

Referring to FIG. 1, a conventional busbar assembly 10 includes a busbar 20, a covering 20C that surrounds the busbar 20, a cap CP, and a tape AL for fixing the cap CP. The busbar 20 may be provided in a metal bar shape, or may be provided in a shape in which metal sheets are stacked. The busbar 20 may include a material having electrical conductivity, for example, a copper (Cu) material.

The covering 20C can surround the busbar 20. The covering 20C can include a material that is electrically insulating, and as an example, it may include a material such as silicone or epoxy. Since the covering 20C surrounds the busbar 20 through which a high current flows, it blocks the busbar 20 from coming into contact with other electrical components or conductive members other than the terminal busbar of the battery module and causing a short circuit. The covering 20C is provided in the shape of a tube, so that the busbar 20 can be inserted into the covering 20C.

Caps CP are provided at both ends of the busbar 20 for insulation. The cap CP may be, for example, a rubber cap. The cap CP may be attached to the covering 20C using a tape AL.

Meanwhile, the busbar 20 may be flexible or rigid. The busbar assembly 10 including a flexible busbar 20 can be bent using a jig or the like. However, there are limitations in bending the busbar assembly 10, particularly, in bending the busbar assembly 10 multiple times. In the case of the busbar assembly 10 including a rigid busbar 20, it is difficult to provide a covering 20C that is bent multiple times without deteriorating the fire resistance.

Therefore, there is a need to develop techniques for implementing a busbar assembly including busbars having complex shapes such as shapes that are bent multiple times.

### [DETAILED DESCRIPTION OF THE INVENTION]

### [Technical Problem]

It is an object of the present disclosure to provide a busbar assembly that can exhibit excellent fire resistance and electrical insulation properties for a busbar that includes a bent portion, and a battery pack including the same.

However, the problem to be solved by embodiments of the present disclosure is not limited to the above-described problems, and can be variously expanded within the scope of the technical idea included in the present disclosure.

### [Technical Solution]

A busbar assembly according to the present disclosure comprises: a busbar that includes a body portion containing a bent portion, and end portions extending from both ends of the body portion and having a through hole formed therein; an insulating layer that is insert-injection molded to surround the body portion; and a cap that surrounds the end portion.

In one embodiment, the insulating layer may include a first portion that surrounds the body portion and a second portion that is extended from the first portion and inserted into the cap.

In one embodiment, a thickness of the second portion may be smaller than that of the first portion, and the second portion may form a step with the first portion.

In one embodiment, the cap may comprise: a body portion that surrounds a part of the end portion in which the through hole is formed; and an extension portion that surrounds the second portion of the insulating layer.

In one embodiment, the cap may have a tube shape into which the end can be inserted.

In one embodiment, the insulating layer may comprises a fire-resistant plastic.

In one embodiment, the cap may comprise a fire-resistant silicone.

In one embodiment, the busbar assembly may further comprise a glass fiber layer disposed on the insulating layer and the cap so as to surround boundary between the insulating layer and the cap.

In one embodiment, the body portion may comprise at least one bent portion.

In one embodiment, the bent portion may comprise a vertically bent portion.

A battery pack according to the present disclosure comprise: at least one busbar assembly described above; battery modules; a BDU (battery disconnect unit) module for controlling electrical connection of the battery modules; and a BMS (battery management system) module for monitoring and controlling operation of the battery modules, wherein the at least one busbar assembly electrically connects at least one of: between the battery modules, between the battery module and the BDU module, between the battery module and the BMS module, and between the BDU module and the BMS module.

### [Advantageous Effects]

The busbar assembly according to the present disclosure can exhibit excellent fire resistance and insulation properties while including a busbar containing a bent portion.

Effects of the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 shows an exploded perspective view and a combined perspective view of a conventional busbar assembly.
FIG. 2 is a plan view of a battery pack according to one embodiment.
FIG. 3 is a perspective view of one of the battery modules included in the battery pack according to FIG. 2.
FIG. 4 is a partial perspective view showing a state in which a module frame and an end plate are removed from the battery module according to FIG. 3.
FIG. 5 is a perspective view of a busbar according to one embodiment.
FIG. 6 is a perspective view of a busbar provided with an insulating layer according to one embodiment.
FIG. 7 is a partial side view of a busbar provided with an insulating layer according to one embodiment.
FIG. 8 is a partial side view of a busbar provided with an insulating layer and a cap according to one embodiment.
FIG. 9 is a partial side view of a busbar assembly according to one embodiment.
FIG. 10 is a perspective view of a busbar assembly according to one embodiment.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

A description of portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Further, throughout the description, a first direction(DR1), a second direction(DR2), and a third direction(DR3) are used as relative concepts. The first direction(DR1), the second direction(DR2), and the third direction(DR3) may intersect perpendicular to each other. Throughout the description, the concepts of upper and lower are described as being distinguished along the third direction(DR3). Also, specifically, an upper direction or an upper side direction means the third direction(DR3). A lower direction or a lower side direction means a direction opposite to the third direction(DR3). throughout the description, the term "thickness" means the length measured in the third direction(DR3).

The terms representing directions such as the front side, the rear side, the left side, the right side, the upper side, and the lower side have been used in the present embodiment, but the terms used are provided simply for convenience of description and may become different according to the position of an object, the position of an observer, or the like.

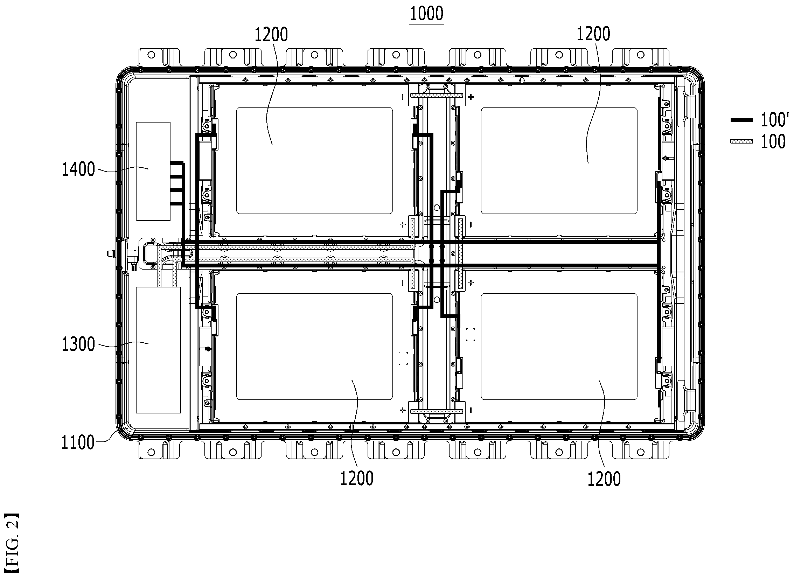

FIG. 2 is a plan view of a battery pack according to one embodiment.

Referring to FIG. 2, a battery pack 1000 according to an embodiment of the present disclosure includes: a busbar assembly 100, a pack frame 1100, battery modules 1200, a BDU(battery disconnect unit) module 1300 for controlling an electrical connection of the battery modules 1200; and a BMS(battery management system) module 1400 for monitoring and controlling an operation of the battery modules 1200. At least one busbar assembly 100 according to this embodiment electrically connects at least one of: between the battery modules 1200, between the battery module 1200 and the BDU module 1300, between the battery module 1200 and the BMS module 1400, or between the BDU module 1300 and the BMS module 1400. Specifically, a plurality of battery modules 1200 can be housed in the pack frame 1100, and an electrical connection between the battery modules 1200 or an electrical connection between the battery modules 1200 and the BDU module 1300 can be achieved by the busbar assembly 100. That is, the busbar assembly 100 according to this embodiment can be in charge of an HV(High voltage) connection. Here, the HV connection is a connection that serves as a power source for supplying electric power that requires high voltage, and means a connection between battery cells or a connection between battery modules.

Meanwhile, the BDU module 1300 is a member for controlling an electrical connection between the battery modules 1200, and can interrupt the electric power between a power conversion device and the battery module 1200. When a condition occurs in which the current exceeds a set range, the BDU module 1300 can interrupt the power of the battery pack 1000, thereby ensuring the safety of the battery pack 1000.

Meanwhile, the LV connection member 100' according to the present embodiment can be in charge of an electrical connection between the battery module 1200 and the BMS module 1400. The electrical connection herein is an LV(low voltage) connection, which means a sensing connection for detecting and controlling the voltage and temperature of the battery module 1200. Specifically, sensors and the like are arranged inside the battery module 1200, and real-time temperature information or voltage information of the battery module 1200 is transmitted to the BMS module 1400 via the LV connection member 100'. It is possible to monitor and control the real-time operating status of the battery module 1200 via the BMS module 1400. Although not specifically shown in the figure, an HV current sensor may be integrated into the BMS module 1400. In this case, the busbar assembly according to the present embodiment may be in charge of an electrical connection between the battery module 1200 and the BMS module 1400 or between the BDU module 1300 and the BMS module 1400.

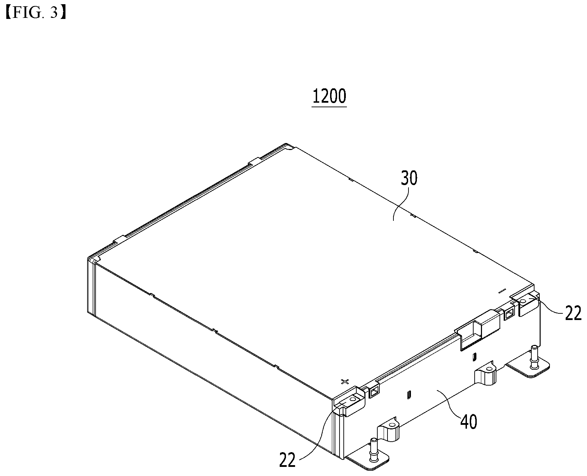

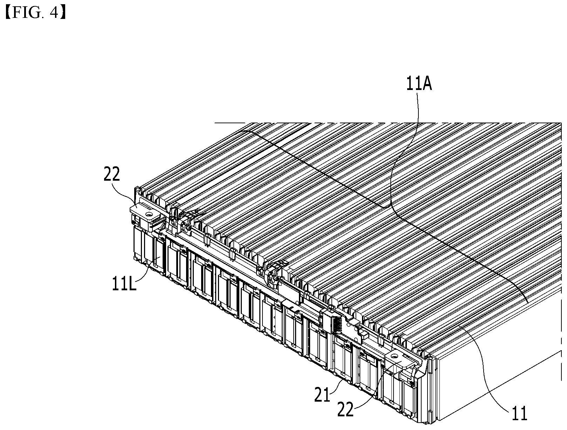

A battery module 1200 according to the present embodiment will be described with reference to FIGS. 3 and 4. However, the battery module 1200 described below is an exemplary structure of a battery module including a plurality of battery cells 11, and various types of battery modules including a plurality of battery cells can be applied.

FIG. 3 is a perspective view of one of the battery modules included in the battery pack according to FIG. 2.

FIG. 4 is a partial perspective view showing a state in which a module frame and an end plate are removed from the battery module according to FIG. 3.

Referring to FIGS. 3 and 4, the battery module 1200 according to the present embodiment may include a battery cell stack 11A in which a plurality of battery cells 11 are stacked. The battery cell stack 11A is illustrated in FIG. 4. This battery cell stack 11A may be housed in the module frame 30 and the end plate 40.

The battery cell 11 may be a pouch-type battery cell. The pouch-type battery cell may be formed by housing an electrode assembly in a pouch case made of a laminate sheet including a resin layer and a metal layer, and then fusing the outer peripheral part of the pouch case. Such battery cells 11 may be formed in a rectangular sheet structure. The electrode lead 11L connected to the electrode assembly protrudes to an outside of the pouch case, wherein the electrode leads 11L of each battery cell 11 may be electrically connected to each other via the lead busbar 21. However, the battery cell 11 of the present disclosure is not limited to a pouch-type battery cell.

On the other hand, at least one electrode lead 11L may be connected to a terminal busbar 22. A portion of the terminal busbar 22 may be exposed to the outside of the battery module 1200 as shown in FIG. 3. Both the lead busbar 21 and the terminal busbar 22 may include a metal material with excellent electrical conductivity.

The busbar assembly 100 according to the present embodiment is electrically connected to such a terminal busbar 22, so that the above-mentioned HV connection can be achieved. That is, the battery module 1200 may be electrically connected to the other battery module 1200, the BDU module 1300, or the BMS module 1400 via the busbar assembly 100 connected to the terminal busbar 22.

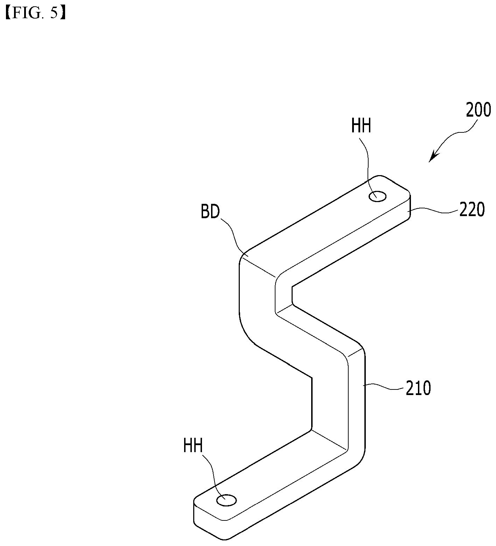

Next, a busbar assembly according to one embodiment will be described in detail with reference to FIGS. 5 to 10.

FIG. 5 is a perspective view of a busbar according to one embodiment.

Referring to FIG. 5, the busbar 200 according to one embodiment includes a body portion 210 and an end portion 220.

The end portion 220 extends from both ends of the body portion 210. The both ends 220 of the busbar 200 may be formed with a through hole(HH) for connecting with a terminal busbar 22 (see FIG. 3) of a battery module 1200 (see FIG. 2). A fastening member may be inserted into the through hole(HH) to connect the busbar 200 to an external electrical device. For example, a bolt may be inserted into the through hole(HH) of the end portion 220 to connect the busbar 200 and the terminal busbar 22 (see FIG. 3) of the battery module 1200 (see FIG. 3). This busbar 200 may be in charge of an HV(High voltage) connection in a battery pack 1000 (see FIG. 2). The HV connection means a connection that serves as a power source for supplying electric power. The busbar 200 is configured to guide an electrical connection of the battery module 1200 (see FIG. 2), and generally includes a metal material having excellent electrical conductivity. As an example, the busbar 200 may include a copper (Cu) material.

The body portion 210 may correspond to the center of the busbar 200. The body portion 210 includes a bent portion BD. The bent portion BD means a portion where the body portion 210 is bent. The bent portion BD may be bent at various angles, for example, may be bent vertically. The body portion 210 may include one or more bent portions BD, and FIG. 5 exemplarily shows that the body portion 210 includes a plurality of bent portions BD. When a plurality of bent portions BD are provided, the bending direction and the bending angle of the bent portions BD may be different from each other, or may be equal to each other, or at least one may be different from the rest.

The body portion 210 may include the bent portions BD, and be bent into various shapes. Thereby, the battery module 1200 (see FIG. 2) to be connected may be effectively connected, and the battery pack 1000 (see FIG. 2) can improve can improve the utilization of internal space.

Meanwhile, for convenience, the busbar 200 has been described therein as including the body portion 210 and the end portion 220, but the body portion 210 and the end portion 220 have an integral shape.

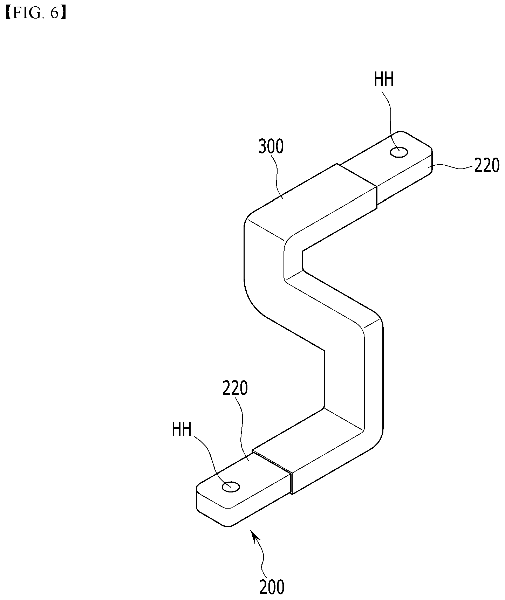

FIG. 6 is a perspective view of a busbar provided with an insulating layer according to one embodiment.

Referring to FIGS. 5 and 6 together, an insulating layer 300 may be provided to cover the busbar 200. The insulating layer 300 is insert-injection molded to surround the body portion 210. Thereby, the insulating layer 300 can be molded along the shape of the body portion 210 including the bent portion BD.

The insulating layer 300 may comprise a fire-resistant plastic and thus have excellent fire resistance. The fire-resistant plastic can serve to block the flame without causing holes or drips for a certain period of time when exposed to flame. Moreover, the fire-resistant plastic may form a carbonized layer in the flame to thereby protect the structure of the inside. The fire-resistant plastic may include at least one of a PPO (Polyphenylene Oxide)-based material, a PA (Polyamide)-based material, and a PBT (Polybutylene Terephthalate)-based material. Therefore, the insulating layer 300 can insulate the body portion 210 of the busbar 200 even in the event of flames or high temperatures, thereby preventing the busbar 200 from coming into contact with other electrical components or conductive members and causing a short circuit.

Furthermore, the insulating layer 300 may comprise a fire-resistant plastic, which may be more advantageous for insert-injection molding the busbar 200 containing the bent portion BD. Specifically, since the fire-resistant plastic has better flowability than the fire-resistant silicone, the shape of the busbar 200 containing the bent portion BD can be molded more easily.

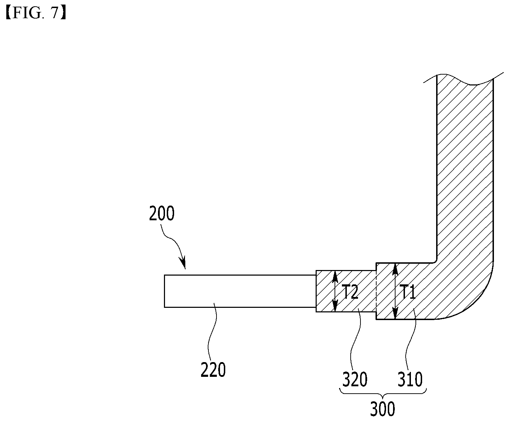

The insulating layer 300 is provided to surround the body portion 210. That is, the insulating layer 300 is provided to insulate the body portion 210 (see FIG. 5). In order to improve insulation properties, the insulating layer 300 can further surround at least a part of the end portion 220. In this regard, please refer to FIG. 7.

FIG. 7 is a partial side view of a busbar provided with an insulating layer according to one embodiment.

FIG. 7 is an enlarged side view of a part of the body portion 210(see FIG. 6) of the busbar 200 and a part of the end portion 220.

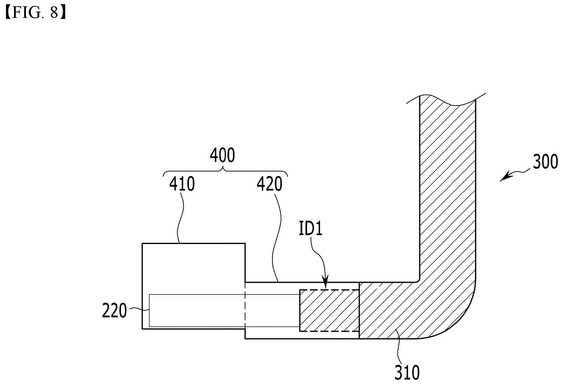

Referring to FIGS. 6 and 7, the insulating layer 300 may include a first portion 310 that surrounds the body portion 210 of the busbar 200 and a second portion 320 that surrounds a part of the end portion 220. The second portion 320 extends from the first portion 310. Specifically, the second portion 320 may be extended from the first portion 310 to an extent that it does not cover a through hole(HH) of the end portion 220, and covered by a cap 400 (see FIG. 8) described below.

The first portion 310 may have a first thickness T1, and the second portion 320 may have a second thickness T2 smaller than the first thickness T1. The second portion 320 forms a step with the first portion 310, and thus may be inserted while a cap 400 (see FIG. 8) described below surrounds the second portion 320.

The insulating layer 300 may include the second portion 320 and thus prevent the busbar 200 from being exposed at the point where the cap 400 (see FIG. 8) is connected, and may ensure a sufficient insulating distance.

FIG. 8 is a partial side view of a busbar provided with an insulating layer and a cap according to one embodiment.

FIG. 8 is an enlarged side view of a part of the body portion 210 (see FIG. 6) of the busbar 200 and an end portion 220.

Referring to FIG. 8, a cap 400 may be provided on the end portion 220. The cap 400 is provided to surround the end portion 220, and specifically, is provided to surround the end portion 220 and the second portion 320. In one embodiment, the cap 400 may have a tube shape into which the end portion 220 and the second portion 320 may be inserted. Alternatively, in one embodiment, the cap 400 may have a shape in which at least a part of the lower portion is open. That is, the cap 400 is sufficient if it surrounds a side surface and an upper surface of the end portion 220 and the second portion 320, and is not limited to one shape.

Next, as an example, an embodiment in which the cap 400 is in the shape of a tube will be described. Specifically, the cap 400 may include a main body portion 410 and an extension portion 420 extended from the main body portion 410. The main body portion 410 may surround a part of the end portion 220 in which the through hole HH is formed. That is, the main body portion 410 may be a portion covering the end of the end portion 220. The extension portion 420 may be a portion that is extended from the main body portion 410 to surround the second portion 320 of the insulating layer 300. The main body portion 410 may have a thickness greater than that of the extension portion 420 so as to house a fastening member that is inserted into the through hole HH.

In one embodiment, the cap 400 may include a fire-resistant silicone and thus have excellent fire resistance. The fire-resistant silicone may be ceramicized at high temperature, unlike common silicone materials that are exposed to flame or burn at high temperatures. Therefore, when exposed to flame, the fire-resistant silicon can be ceramicized without burning, and can maintain insulation properties for the busbar 200. For example, the fire-resistant silicon can be ceramicized at a temperature of 500 degrees Celsius or higher and 1700 degrees Celsius or lower. However, the temperature range in which the fire-resistant silicon is ceramicized is not limited thereto.

The fire-resistant silicone may include silicone polymer and silica. For example, the applied silicone polymer may be a polysiloxane-based compound having a vinyl group as a functional group, and may serve as a base material for a fire-resistant silicone material. For example, the applied silica may be a fumed silica, which is a reinforcing filler included in the silicone polymer. A high-purity silicone chloride(SiCl₄) compound can be produced using metallic silicone as a main raw material through reaction with hydrochloric acid and purification process, and this can be reacted with hydrogen and oxygen in a high temperature flame to obtain fumed silica. Further, the fire-resistant silicone may contain platinum Pt as a catalyst.

When the fire-resistant silicone is exposed to flame or high heat, silica(SiO₂) is crosslinked together with decomposition of the silicone polymer to form a ceramic material. The cap 400 of one embodiment including fire-resistant silicone does not burn or melt out, but can be ceramicized to maintain electrical insulation properties even if exposed to flame or placed in a high-temperature environment. Therefore, the cap 400 can insulate the end portion 220 of the busbar 200 even in the event of a flame or high temperatures, and can prevent the busbar 200 from coming into contact with other electrical equipment or conductive members and causing a short circuit.

Meanwhile, an insulating layer 300 and a cap 400 are applied to the busbar 200, so that the whole of the body portion 210 and the end portion 220 can be insulated with a fire-resistant material. In addition, the busbar 200 covered by the second portion 320 of the insulating layer 300 can be insulated once more by the cap 400, thereby securing an insulation distance ID1.

Meanwhile, although not shown in FIG. 8, an external fastening member may be inserted into the through hole HH (see FIG. 5) of the end portion 220 before the cap 400 is provided. Thereby, the end portion 220 may be electrically connected to the terminal busbar 22 (see FIG. 3). In FIG. 8 and the following figures, only the structures of the busbar 200, the insulating layer 300, and the cap 400 are shown and described for convenience of explanation.

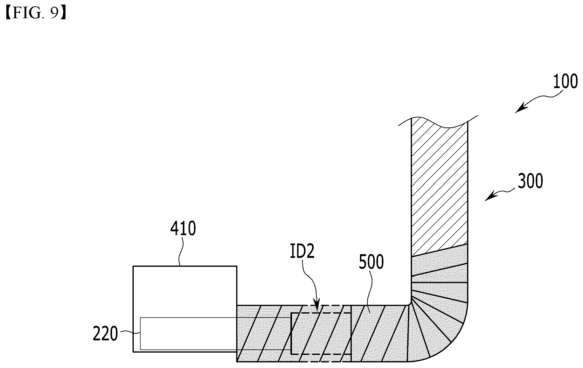

FIG. 9 is a partial side view of a busbar assembly according to one embodiment.

FIG. 9 is an enlarged partial side view of one end of the busbar assembly 100.

Referring to FIG. 9, the busbar assembly 100 according to one embodiment may further include a glass fiber layer 500. The glass fiber layer 500 is provided to surround a boundary between the insulating layer 300 and the cap 400. Specifically, the glass fiber layer 500 may include a boundary between the insulating layer 300 and the cap 400 and thus be provided to further surround a part of the insulating layer 300 and a part of the cap 400.

The insulation distance ID2 can be further ensured while surrounding the boundary between the insulating layer 300 and the cap 400 once more with the glass fiber layer 500.

Furthermore, the glass fiber layer 500 can function as a primary protective film that provides wear resistance to the busbar assembly 100 and physically protects the internal structure. For example, the glass fiber layer 500 can prevent the boundary between the insulating layer 300 and the cap 400 from being directly exposed to external flames.

The glass fiber layer 500 can also provide structural rigidity to the busbar assembly 100 and improve insulation performance. As an example, when the cap 400 is ceramicized in a flame or high-temperature environment, the cap 400 can maintain electrical insulation properties, but may be reduced in strength and broken by external force. The glass fiber layer 500 can provide structural rigidity and prevent the cap 400 from being broken by external force.

In one embodiment, the glass fiber layer 500 is provided in the form of a glass fiber tape and can be formed by winding it in a plurality of turns.

Meanwhile, while one end of the busbar 200 has been illustrated and described in an enlarged manner in FIGS. 7, 8 and 9, the same description can be applied to the other end of the busbar 200.

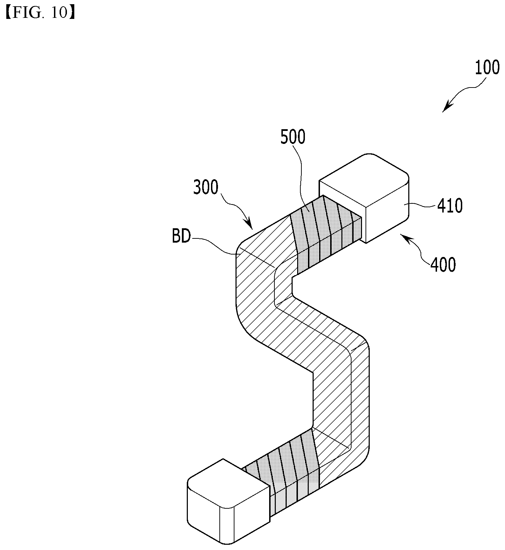

FIG. 10 is a perspective view of a busbar assembly according to one embodiment.

Referring to FIGS. 5 and 10, a busbar assembly 100 according to one embodiment may include a busbar 200 containing a bent portion BD, an insulating layer 300 that is insert-injection molded to surround a body portion 210 of the busbar 200, a cap 400 that surrounds an end portion 220 of the busbar 200, and a glass fiber layer 500. Thereby, the busbar assembly 100 including the busbar 200 including the bent portion BD may have excellent fire resistance and insulation properties.

The one or more battery modules according to embodiments of the present disclosure described above can be mounted together with various control and protection systems such as a BMS (battery management system), a BDU(battery disconnect unit), and a cooling system to form a battery pack.

The battery module or the battery pack can be applied to various devices. Specifically, it can be applied to vehicle means such as an electric bike, an electric vehicle, and a hybrid electric vehicle, or an ESS(Energy Storage System) and may be applied to various devices capable of using a secondary battery, without being limited thereto.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

100: busbar assembly
200: busbar
210: body portion
220: end portion
300: insulating layer
310: first portion
320: second portion
400: cap
410: main body portion
420: extension portion
500: glass fiber layer
1000: battery pack
1100: pack frame
1200: battery module
1300: BDU module
1400: BMS module

## Claims

1. A busbar assembly comprising:
a busbar that includes a body portion containing a bent portion, and end portions extending from both ends of the body portion and having a through hole formed therein;
an insulating layer that is insert-injection molded to surround the body portion; and
a cap that surrounds the end portion.

2. The busbar assembly according to claim 1, wherein:
the insulating layer includes a first portion that surrounds the body portion and a second portion that is extended from the first portion and inserted into the cap.

3. The busbar assembly according to claim 2, wherein:
a thickness of the second portion is smaller than that of the first portion, and the second portion forms a step with the first portion.

4. The busbar assembly according to claim 2, wherein:
the cap comprises:
a body portion that surrounds a part of the end portion in which the through hole is formed; and
an extension portion that surrounds the second portion of the insulating layer.

5. The busbar assembly according to claim 1, wherein:
the cap has a tube shape into which the end can be inserted.

6. The busbar assembly according to claim 1, wherein:
the insulating layer comprises a fire-resistant plastic.

7. The busbar assembly according to claim 1, wherein:
the cap comprises a fire-resistant silicone.

8. The busbar assembly according to claim 1,
further comprising a glass fiber layer disposed on the insulating layer and the cap so as to surround a boundary between the insulating layer and the cap.

9. The busbar assembly according to claim 1, wherein:
the body portion comprises at least one bent portion.

10. The busbar assembly according to claim 1, wherein:
the bent portion comprises a vertically bent portion.

11. A battery pack comprising:
the busbar assembly according to any one of claims 1 to 10;
battery modules;
a BDU (battery disconnect unit) module for controlling electrical connection of the battery modules; and
a BMS (battery management system) module for monitoring and controlling operation of the battery modules,
wherein the at least one busbar assembly electrically connects at least one of: between the battery modules, between the battery module and the BDU module, between the battery module and the BMS module, and between the BDU module and the BMS module.
